# EUROPEAN PATENT APPLICATION

(11) **EP 1 548 910 A1**
(43) Date of publication of application: **29.06.2005**
(21) Application number: 03029002.7
(22) Date of filing: 16.12.2003
(51) Int. Cl.: H02J 7/00, G01R 31/36

(54) **Battery charger with state of charge display**

(71) Applicant: QQE TECHNOLOGY CO.,LTD., Neihu District, Taipei (TW)
(72) Inventor: Chuang, Chi-Chang, Neihu District Taipei (TW)
(74) Representative: Reinhard - Skuhra - Weise & Partner

(57) **Abstract**

The present invention provides a charger capable of displaying quantity of charge of a rechargeable battery. The charger is to employ a charge device that can provide external power for power conversion so as to charge the rechargeable battery. After the charging operation, a display signal is outputted. Besides, a display unit is provided on the charge device for receiving the display signal. After the rechargeable battery has been charged on the charge device, through the display unit, the display signal will provide multiple percentage levels for electricity quantity and display an actual quantity of charge that has been charged to the rechargeable battery. Thus, a complete quantity of charge can be obtained instantly and precisely, and the user can judge how long and how far the rechargeable battery can last according to the information.

## Description

### FIELD OF THE INVENTION

The invention relates to a charger that is capable of displaying quantity of charge of a rechargeable battery and, more particularly, to an electrical appliance equipped with a display unit capable of displaying multiple percentage levels for electricity quantity, and the electricity quantity displayed is the exact quantity of charge charged to the rechargeable battery so that when the rechargeable battery is in use, the user can operate the battery and read the exact quantity of charge displayed on the battery.

### BACKGROUND OF THE INVENTION

A rechargeable battery allows people to be free from worrying about power loss when using an electrical product. Besides, with its portability and reusability, a rechargeable battery can enhance not only the convenience of product operation but also the benefit of environmental protection. Moreover, due to large increase in capacity of rechargeable battery and advantages brought in by materials of rechargeable battery, the applicable range of rechargeable battery has been broadened. For this reason, small-sized household appliances, such as a stereo, are no longer the only products that rechargeable batteries can apply to; instead, large-sized transportation equipment, such as an electric motorcycle, can be included in the application range. Hence, how to efficiently charge a rechargeable battery has become an important issue.

With reference to Taiwan Patent Gazette Publication No. 507412 entitled "Charge Device of Rechargeable Battery, Charge Method for Rechargeable Battery Set, and Rechargeable Battery Set", the charge device of a rechargeable battery disclosed in this invention is used to charge a rechargeable battery set containing battery cells. The rechargeable battery set can store information of maximum charge current and information of maximum charge voltage and then connect the two. In addition, the rechargeable battery set also includes a memory mechanism that can store digital information of the maximum charge voltage. Also, with reference to Taiwan Patent Gazette Publication No. 522624 entitled "Charge Device of Rechargeable Battery, Rechargeable Battery Set, and Charge Method for Secondary Battery", this invention is to provide a charge device capable of reducing charge time and generating smaller volume when charging several rechargeable battery sets at the same time.

The above-mentioned charge methods for rechargeable battery all disclose techniques about how to charge efficiently within the shortest time period. However, to a user, before using a battery, the user must know exactly how much quantity of charge is in the battery in order to decide how long the battery can last before it needs another recharge or replacement for a new battery. Therefore, referring to Taiwan Patent Gazette Publication No. 533646 entitled "Charge System of Rechargeable Battery and Charge Device Thereof", a micro controller designed with a deduction programming system is disclosed in the invention in order to supervise a situation where a control signal is generated while the rechargeable battery is in the state of charge as well as to provide appropriate charge voltage and current to the rechargeable battery. However, although the invention is able to inspect the capacity of rechargeable battery, it can only perform inspection processing once; in other words, the invention can only inspect whether the battery is fully charged. In fact, it lacks the ability to precisely measure the actual capacity of the battery.

From the above-mentioned descriptions, it is obvious that the prior art can do so far is to inspect whether the rechargeable battery is fully charged. Unfortunately, such technique is not so useful for a user. For instance, when a user intends to ride an electric motorcycle, the user is unable to judge how far the motorcycle can go if the actual quantity of charge in the battery is unknown. If, for this reason, a waiting for the recharge is a must, it will cause inconvenience to the user because the user has no idea how much time should be spent for waiting. Another situation is that if a rechargeable battery is set into a system's using end (e.g., the using end of a mobile phone), the quantity of charge can be instantly displayed. However, if the user needs several rechargeable batteries for use at a time, the user has to check each battery separately for getting its quantity of charge because there is no percentage display device provided on the charger. Therefore, the only way to get each battery's quantity of charge is to alternately set each battery into the system's using end for getting displayed information. In view of the problem, it is important for the charger to be able to provide an instant and precise electricity quantity percentage on the charger for the user when the charger is in use.

### SUMMARY OF THE INVENTION

To cope with the above-mentioned problems, the main object of the present invention is to provide a charger capable of displaying quantity of charge for a rechargeable battery; through the charger, a charge device can charge a rechargeable battery by providing external power for power conversion; after the charging operation, a display signal can be outputted, and a display unit is provided on the charge device for receiving the display signal; then, after the rechargeable battery has finished charging on the charge device, through the display unit, the display signal can provide multiple percentage levels for electricity quantity and display actual quantity of charge that has been charged to the rechargeable battery; thus, a complete quantity of charge can be obtained instantly and precisely, and the user can judge how long and how far the battery can last according to the information.

Another object of the present invention is to independently read the quantity of charge of the rechargeable battery so as to obtain a precise electricity quantity percentage without being disturbed by the external power; first, the charger is in an external-power-off state; second, the rechargeable battery will return the actual charged quantity; third, the actual charged quantity and the predetermined referential electricity quantity provided by the charger will be calculated; fourth, after the calculation, the electricity quantity percentage that shows what has been actually charged to the rechargeable battery can be obtained; and finally, according to the electricity quantity percentage, the charger will send out a display signal to the display unit, informing the user about the actual quantity of charge so that the user can make decisions according to the precise information.

### BRIEF DESCRIPTION OF THE DRAWINGS

Fig. 1, Fig. 2, and Fig. 3 are external view and side views of the charger of the present invention.
Fig. 4 is a block diagram showing the circuit structure of the present invention.
Fig. 5 is a flow chart of circuits showing an ongoing charging operation of the invention.
Fig. 6 is a flow chart of circuits showing an ongoing inspection and display of the invention.
Fig. 7 is a flow chart showing an embodiment of the invention.

### DETAILED DESCRIPTTON OF THE PREFERRED EMBODIMENTS

The objects and technical contents of the present invention will be better understood through the description of the following embodiments with reference to the drawings.

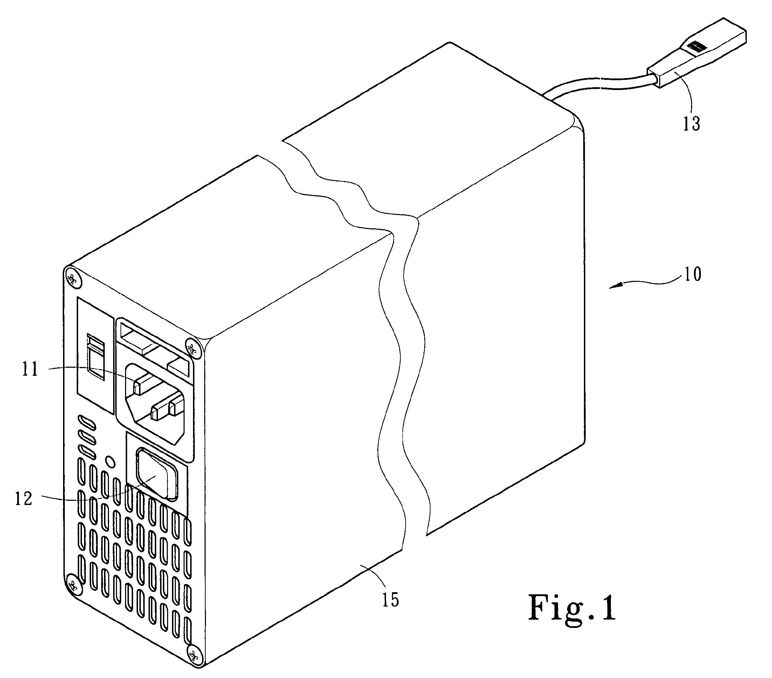

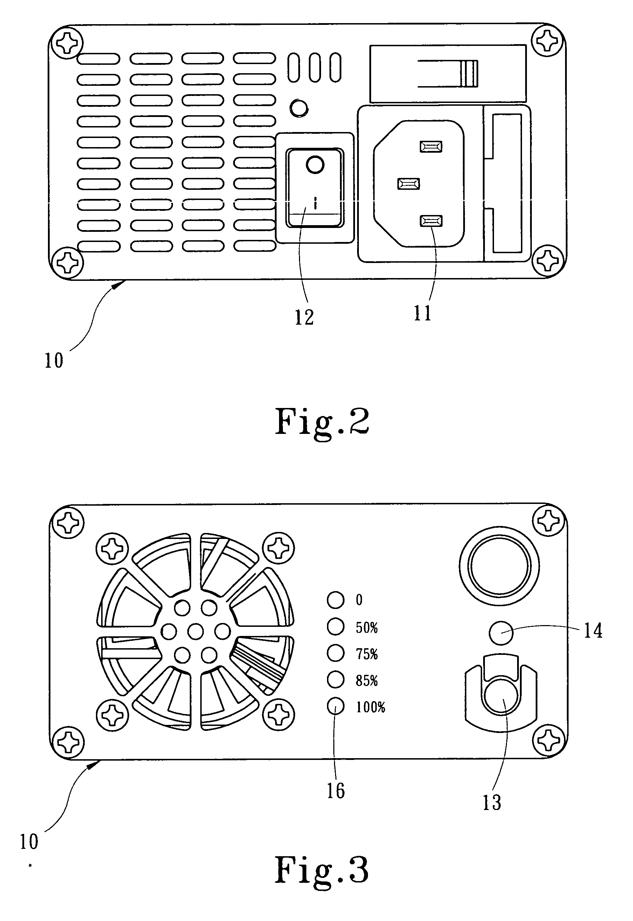

Referring to Figs. 1, 2, and 3, the present invention provides a charger 10 capable of displaying quantity of charge of a rechargeable battery 30. As to the structure of charger 10, it includes a charge device 15; also, a power input port 11 and a switch 12 that can be plugged into an external power 20 are provided on the charge device 15. In addition, a power transmission portion 13 connected to the rechargeable battery 30 is also provided on the charge device 15, and the power transmission portion 13 can be an electrical connecting line with a plug-in terminal, as shown in FIG. 1, or can be an electricity supporting slot provided on the charge device 15. (The size of power transmission portion 13 depends on the size of rechargeable battery 30, whereas the present invention employs a large-sized rechargeable battery 30 to illustrate the embodiment.) In addition, a display unit 16 is set on the charge device 15, and the display unit 16 can be a set of lights of light-emitting diode. Each light of the light set can be distinguished by different colors or by labels showing multiple percentage levels for electricity quantity, allowing the user to judge how much the rechargeable battery 30 is charged. Alternatively, the display unit 16 can also be a LCD module or wave band displayer, which also allows the user to promptly know how much the rechargeable battery 30 is charged. In addition, an error detection light 14 can be further provided on the charge device 15 so that during the charging process, if the rechargeable battery 30 is unable to perform charging or if the temperature is too high, the error detection light 14 will flash to inform the user for a battery replacement or turning off the electric power.

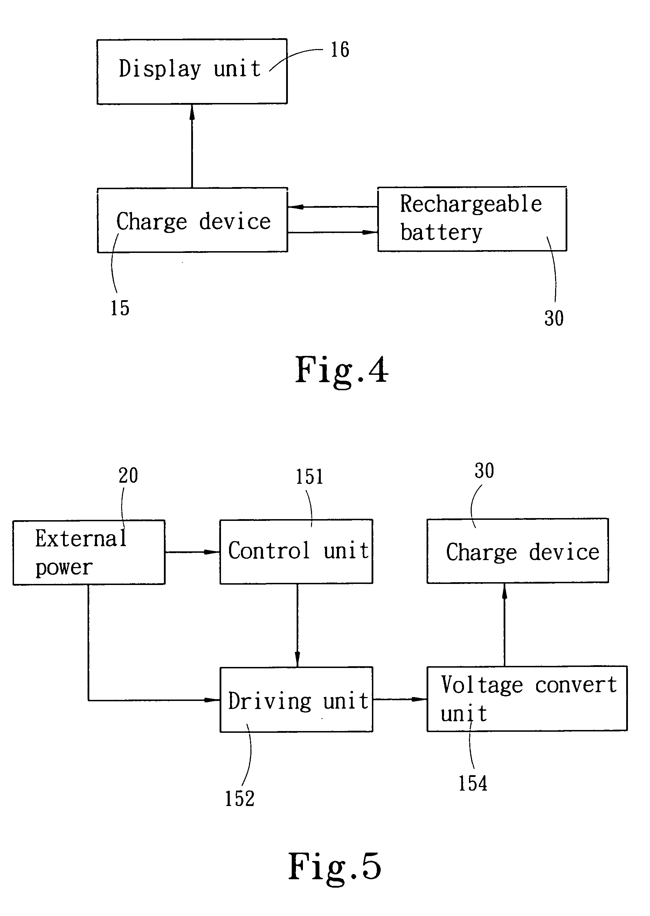

Next, referring to Figs. 4, 5, and 6, with respect to the circuit structure, the charger 10 includes a charge device 15 for providing external power 20 for power conversion and charging the rechargeable battery 30 and then outputting a display signal after the charging; and a display unit 16, provided on the charge device 15 for receiving the display signal, and after the rechargeable battery 30 has finished charging, the display unit 16 will provide multiple percentage levels for electricity quantity according to the display signal and then display the actual quantity of charge that has been charged to the rechargeable battery 30. Also, the circuit layout of the charge device 15 of the present invention includes: a control unit 151, which is to predetermine a referential electricity quantity as well as output a charging signal or power-off signal for the external power 20 to execute charging or terminate charging respectively, and when the external power 20 is in a state of off-power, the control unit 151 will receive the charged quantity returned from the rechargeable battery 30, and then the charged quantity and the referential electricity quantity will be calculated for obtaining an electricity quantity percentage, so that the control unit 151 can output a display signal according to the electricity quantity percentage; a driving unit 152, which is to receive the charging signal and power-off signal and convert the charging signal into a driving signal for outputting; and a voltage convert unit 154, which is to receive the driving signal and convert the external power 20 into direct current so as to charge the rechargeable battery 30.

To further illustrate the above descriptions in detail, first, please refer to Fig. 5, which is a flow chart showing an ongoing charging operation performed by the charger 10 to the rechargeable battery 30 of the present invention. When the user has done the connection between the rechargeable battery 30 and the charge device 15 of the charger 10, the charge device 15 will output a charging signal to the driving unit 152 through the control unit 151. Then, by means of optical coupling and resonance frequency, the driving unit 152 will convert the charging signal into a driving signal and send it to the voltage convert unit 154. After the voltage convert unit 154 receives the driving signal, the voltage convert unit 154 will convert the external power 20 from AC into DC and charge the rechargeable battery 30 under a constant current mode. Since the process of charging is a well-known process, it will not be reiterated here.

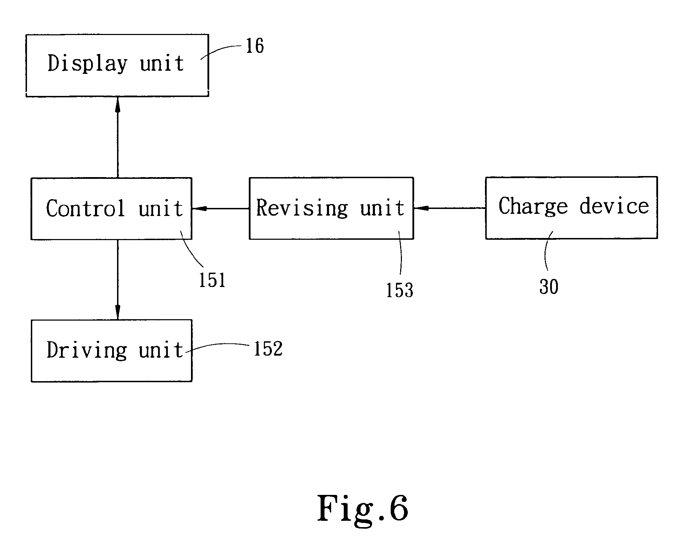

Next, Fig. 6 is a flow chart showing an ongoing inspection and display of actual quantity of charge completed by the rechargeable battery 30 according to the present invention. Referring to Fig. 6, during the charging process from the charge device 15 to the rechargeable battery 30, the control unit 151 of the charger 10 will predetermine a terminating charging signal when the control unit 151 is in either an initial state where the battery is installed for the first time or in a charging state where the battery has been installed already. Likewise, the terminating charging signal can predetermine a time difference interval that can be sent out by the control unit 151. At this time, if the driving unit 152 receives the terminating charging signal, the driving unit 152 will be in a shut down state, which means the ongoing charging operation from the external power 20 to the rechargeable battery 30 will be terminated. Then, as the external power 20 is in a state of terminating charging, through the power transmission portion 13, the rechargeable battery 30 will return its actual quantity of charge to the control unit 151 of the charger 10. Besides, in order to obtain a more accurate voltage level of actual quantity of charge charged to the rechargeable battery 30, a revising unit 153 for revising floating voltage level can be provided between the control unit 151 and the rechargeable battery 30, so that the revising unit 153 can polish the actual quantity of charge returned by the rechargeable battery 30, making the quantity more accurate since the revising unit 153 can avoid false voltage caused by the external power 20's power-off. Then, the control unit 151 of the charger 10 will provide a predetermined referential electricity quantity, and the referential electricity quantity and the actual quantity of charge returned from the rechargeable battery 30 will be calculated so as to obtain a completed electricity quantity percentage that has been actually charged. Finally, the control unit 151 of the charger 10 will define the electricity quantity percentage and send out a display signal to the display unit 16 according to the electricity quantity percentage.

The charger 10 of the present invention is applicable to the lead acid battery 30, nickel hydrogen battery 30, and nickel cadmium battery 30. The following is an embodiment to further illustrate the present invention.

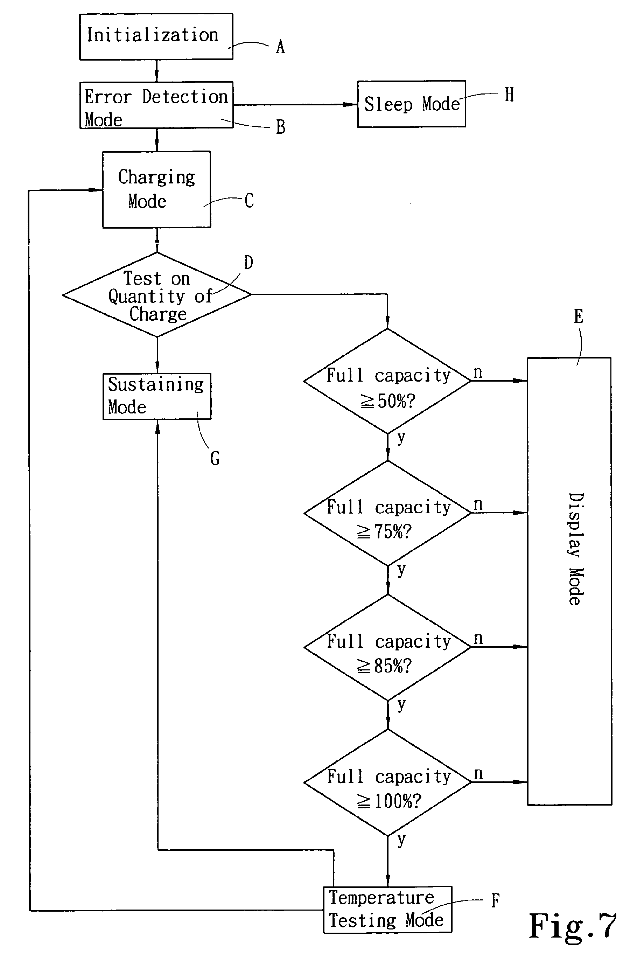

Referring to Fig. 7, the process of charging from the charger 10 to the rechargeable battery 30 according to the present invention includes the following procedures:
A. Initialization A: Determine charging time, referential electricity quantity, and electricity quantity percentage for display for the BIOS in the control unit 151 of the charger 10 according to the factors such as desired type and capacity of the rechargeable battery 30.
B. Error Detection Mode B: When the rechargeable battery 30 is connected to the charger 10, first, the charger 10 will perform an error detection test on the rechargeable battery 30 to decide whether the charging operation should be going on. The testing method is to charge the rechargeable battery 30 for a short time period, and then terminate the external power 20 to obtain a measured voltage V1. Then, repeat the same charging operation once and obtain another measured voltage V2 after the external power 20 is terminated. If V2 ≦ V1, it means that the rechargeable battery 30 is in a manner of negative voltage and therefore unable to obtain a charging operation from the external power 20; in other words, a charging operation on the rechargeable battery 30 is impossible. Therefore, the charger 10 will go into the sleep mode H. Then, the control unit 151 will send out a display signal to the error detection light 14 to inform the user for a battery replacement.
C. Charging Mode C: After the rechargeable battery 30 has gone through Error Detection Mode B, the charger 10 will charge the rechargeable battery 30 by means of the constant current mode, according to the charging procedures shown in Fig. 5. Besides, to allow the user instantly to know the completed quantity of charge of the rechargeable battery 30, the Charging Mode C can set the charging time as multiple intervals for charging.
D. Test on Quantity of Charge D: When each charging interval of Charging Mode C is finished, the control unit 151 of the charger 10 will send out a power-off signal to the driving unit 152 for stopping power supply by the external power 20. Meanwhile, the rechargeable battery 30 will return an actual quantity of charge, wherein the actual quantity of charge will first go through the revising unit 153 and then go to the control unit 151. Then, the control unit 151 will predetermine a referential electricity quantity and perform an algorithm for calculation. Finally, an electricity quantity percentage will be obtained according to the predetermined percentage.
E. Display Mode E: According to the electricity quantity percentage, the control unit 151 will send out a display signal to the display unit 16. In this embodiment, an electricity quantity percentage is displayed based on the following multiple percentage levels: larger or equal to 50%, 75%, 85%, and 100%. As mentioned earlier, the control unit 151 will determine the display percentage in terms of factors such as type and capacity of the rechargeable battery 30. In particular, the electricity quantity percentage can be altered according to the different needs of the user. Also, the display method can take either LED light set or wave band displayer. Thus, when the user is getting the rechargeable battery 30 for use, the available electricity quantity of the battery can be estimated immediately according to the electricity quantity percentage showed on the display unit 16 of the charger 10. Therefore, the displayed information is handy for the user to judge the expected time span and distance that the battery can last.
F. Temperature Testing Mode F: When a charging interval of Charging Mode C is finished and the electricity quantity percentage is displayed, the rechargeable battery 30 will do a temperature test before the next charging interval begins. The main purpose of temperature test is to check whether the battery has been damaged somehow so as to prevent battery from rupture or explosion.
G. Sustaining Mode G: When the predetermined charging time is ended or the battery's actual quantity of charge has reached its full capacity, the charger 10 will enter into the Sustaining Mode G if the user has not yet fetched the fully-charged battery for use. Then, the charger 10 will perform pulse charging on the battery for keeping the battery in a fully charged state.

It can be well understood from the above descriptions that the present invention can provide an actual quantity of charge under the situation that the external power 20 is in a power-off state, and in turn the power-off state can be provided by the Error Detection Mode and the Test on Quantity of Charge. Therefore, when the user is charging the rechargeable battery 30, the user can obtain an instant and precise quantity of charge to facilitate judging the expected time span and distance that the battery can last.

The embodiment above is only intended to illustrate the present invention; it does not, however, to limit the present invention to the specific embodiment. Accordingly, various modifications and changes may be made without departing from the spirit and scope of the present invention as described in the following claims.

## Claims

1. A charger capable of displaying quantity of charge of a rechargeable battery, including:
a charge device, to provide external power for power conversion so as to charge the rechargeable battery and output a display signal after the charging operation;
a display unit, provided on the charge device for receiving said display signal, and after said rechargeable battery has been charged on the charge device, according to said display signal, said display unit will provide multiple percentage levels for electricity quantity to display the actual quantity of charge that has been charged to said rechargeable battery.

2. The charger capable of displaying quantity of charge of a rechargeable battery according to claim 1, wherein said display unit is a set of lights of light-emitting diode.

3. The charger capable of displaying quantity of charge of a rechargeable battery according to claim 1, wherein said display unit is a liquid crystal display module.

4. The charger capable of displaying quantity of charge of a rechargeable battery according to claim 1, wherein said display unit is a wave band displayer.

5. The charger capable of displaying quantity of charge of a rechargeable battery according to claim 1, wherein said rechargeable battery is a lead acid battery.

6. The charger capable of displaying quantity of charge of a rechargeable battery according to claim 1, wherein said rechargeable battery is a nickel hydrogen battery.

7. The charger capable of displaying quantity of charge of a rechargeable battery according to claim 1, wherein said rechargeable battery is a nickel cadmium battery.

8. The charger capable of displaying quantity of charge of a rechargeable battery according to claim 1, wherein said charging operation of said external power is performed under a constant current mode.

9. The charger capable of displaying quantity of charge of a rechargeable battery according to claim 1, wherein said charge device includes:
a control unit, which is to predetermine a referential electricity quantity as well as output a charging signal or power-off signal for the external power to execute charging or terminate charging respectively, and when said external power is in a state of off-power, said control unit will receive the charged quantity returned from saidrechargeable battery, and then said charged quantity and said referential electricity quantity will be calculated for obtaining an electricity quantity percentage, so that said control unit can output a display signal according to said electricity quantity percentage;
a driving unit, which is to receive said charging signal and power-off signal and then convert said charging signal into a driving signal for outputting; and
a voltage convert unit, which is to receive the driving signal and convert said external power into direct current in order to charge said rechargeable battery.

10. The charger capable of displaying quantity of charge of a rechargeable battery according to claim 9, wherein a revising unit is provided between said control unit and said rechargeable battery.

11. The charger capable of displaying quantity of charge of a rechargeable battery according to claim 9, wherein said charging procedures of said charger include:
A. Initialization: Determine charging time, referential electricity quantity, and electricity quantity percentage for display in said control unit, according to said factors such as desired type and capacity of said rechargeable battery.
B. Error Detection Mode: When said rechargeable battery is connected to said charger, said charger will first perform error detection to check if said rechargeable battery is ready for charging;
C. Charging Mode: After the rechargeable battery has gone through said Error Detection Mode, according to said predetermined time, said charger will charge said rechargeable battery by means of said constant current mode, and said Charging Mode can set said charging time as multiple intervals for charging.
D. Test on Quantity of Charge: When each charging interval of said Charging Mode is finished, said control unit of said charger will send out a power-off signal to said driving unit for terminating power supply from said external power, which in turn allows said rechargeable battery to return an actual quantity of charge to said control unit, and said control unit will predetermine a referential electricity quantity and perform an algorithm for calculation; by doing so, an electricity quantity percentage will be obtained according to said predetermined percentage.
E. Display Mode: said control unit will send out a display signal to said display unit according to said electricity quantity percentage.

12. The charger capable of displaying quantity of charge of a rechargeable battery according to claim 11, wherein after said Error Detection Mode detects that performing a charging operation is impossible, said Error Detection Mode will go into a sleep mode.

13. The charger capable of displaying quantity of charge of a rechargeable battery according to claim 11, wherein said procedures further include a Temperature Testing Mode.

14. The charger capable of displaying quantity of charge of a rechargeable battery according to claim 11, wherein said procedures further include a Sustaining Mode, which will be employed when said predetermined charging time is completed or when the battery's quantity of charge has reached a full capacity, and then a continuous charging method will be applied for maintaining said battery's fully charged state.

15. A charger capable of displaying quantity of charge of a rechargeable battery, wherein said charger is a charge device capable of performing power conversion, including a power input port for connecting to said external power; a switch for turning on and off said external power for power supply; and a power transmission portion, connected to said rechargeable battery for power transmission, wherein said specific feature of said charger is:
a display unit, which is provided on said charger, and said display unit provides multiple percentage levels for electricity quantity and displays an actual quantity of charge that has been charged to said rechargeable battery.

16. The charger capable of displaying quantity of charge of a rechargeable battery according to claim 15, wherein said charger further includes an error detection light.
